# EUROPEAN PATENT APPLICATION

(11) **EP 3 660 186 A1**
(43) Date of publication of application: **03.06.2020**
(21) Application number: 18839109.8
(22) Date of filing: 25.07.2018
(51) Int. Cl.: C25B 1/04, C25B 9/10, C25B 11/04, C25B 11/03, C25B 13/08, C25B 1/08, C25B 1/10

(54) **APPARATUS FOR ELECTROCHEMICALLY GENERATING OXYGEN**

(30) Priority: 26.07.2017 KR 20170094511; 02.07.2018 KR 20180076331
(71) Applicant: Faraday O2 Inc., Pohang-si, Gyeongsangbuk-do 37666 (KR)
(72) Inventor: KIM, Yong Tae, Busan 48050 (KR)
(74) Representative: Zardi, Marco
(86) International application number: PCT/KR2018/008438
(87) International publication number: WO 2019/022515

(57) **Abstract**

The present invention relates to an oxygen generating apparatus comprising: a membrane-electrode assembly including an anode connected to a first pole of a power supply device, a cathode connected to a second pole of the power supply device, and an electrolyte membrane provided between the anode and the cathode; a water supply source for supplying water to the anode; and an oxygen supply unit for supplying oxygen to the cathode, wherein oxygen (O₂) is generated at the anode by using an oxygen evolution reaction (OER) and water (H₂O) is generated at the cathode by using an oxygen reduction reaction (ORR). The present invention may provide an apparatus for electrochemically generating oxygen, which uses an electrochemical method and thus can generate oxygen without noise or vibration, and has a simple configuration capable of reducing the volume of the apparatus.

## Description

### [Technical Field]

The present invention relates to an electrochemical oxygen generator, and more particularly, to an electrochemical oxygen generator applicable to various fields such as in portable, domestic, medical, vehicular, or industrial oxygen generating devices, oxygen pumps, oxygen compressors, or oxygen concentrators.

### [Background Art]

Recently, as atmospheric contamination has intensified due to environmental problems or the like, oxygen-related products are being attracted attention.

In general, oxygen is an essential element for the survival of humankind, and in various fields, technology for generating high purity oxygen as needed is being considered to be very important.

For example, oxygen generators are applied to various fields such as in portable, domestic, medical, vehicular, or industrial oxygen generating devices, oxygen pumps, oxygen compressors, or oxygen concentrators.

Such an oxygen generator uses the conventional pressure swing adsorption (PSA) method, membrane separation method, or oxygen generating technology using an oxygen tank.

However, the conventional oxygen generating technology such as the PSA method or the membrane separation method is highly expensive due to a large size of a system due to a complicated oxygen generating process and use of a large amount of an adsorbent or the like. In addition, in the case of these methods, since a compressor should be used, noise and vibration inevitably occur.

Accordingly, in the case of the oxygen generator using the PSA method or the membrane separation method, it is difficult to miniaturize the oxygen generator and it is difficult to popularize the oxygen generator because the oxygen generator cannot be used in a space requiring quiet operation.

In addition, the oxygen generator using the oxygen tank has advantages in that it is possible to lower the price of the oxygen generator, miniaturize the oxygen generator, and implement noise-free and vibration-free oxygen generation but has a problem in that the oxygen tank should be periodically filled with oxygen from a specialized gas company in accordance with the use of the oxygen generator. Furthermore, the oxygen generator has a problem in that it is very inconvenient to use the oxygen generator due to the usage time of the oxygen generator being limited to the size of the oxygen tank.

### [Disclosure]

### [Technical Problem]

The present invention is directed to providing an electrochemical oxygen generator capable of generating oxygen without noise and vibration using an electrochemical method and being manufactured as a miniaturized device.

Objects of the present invention are not limited to the objects described above, and other objects that are not described will be clearly understood by a person skilled in the art from the description below.

### [Technical Solution]

One aspect of the present invention provides an oxygen generator, wherein an oxygen reduction reaction occurs at a cathode to which outside air is introduced, an oxygen evolution reaction occurs at an anode to which water is supplied, and an air flow rate at which the outside air flows is 20 ccm or more.

Oxygen (O₂) may be generated at the anode using the oxygen evolution reaction (OER), and water (H₂O) may be generated at the cathode using the oxygen reduction reaction (ORR).

Another aspect of the present invention provides an oxygen generator includes a membrane-electrode assembly including an anode connected to a first electrode of a power supply, a cathode connected to a second electrode of the power supply, and an electrolyte membrane provided between the anode and the cathode, a water supply source configured to supply water to the anode, and an air supply unit configured to supply oxygen to the cathode, wherein oxygen (O₂) is generated at the anode using an OER, and water (H₂O) is generated at the cathode using an ORR.

The oxygen generator may further include a water collection line configured to collect water (H₂O) generated at the cathode in the water supply source.

The oxygen generator may further include a first outer frame portion positioned outside the anode and a second outer frame portion positioned outside the cathode, wherein the first outer frame portion includes a first outer frame, a water inlet positioned at one side of the first outer frame, and an oxygen outlet positioned at the other side of the first outer frame, and the second outer frame portion includes a second outer frame, an oxygen inlet positioned at one side of the second outer frame, and a water outlet positioned at the other side of the second outer frame.

Water (H₂O) supplied from the water supply source may be supplied to the anode through the water inlet, hydrogen ions (H⁺), oxygen (O₂), and electrons may be generated by electrolyzing water (H₂O) and the generated oxygen (O₂) may be discharged through the oxygen outlet at the anode, and oxygen (O₂) in air supplied from the oxygen inlet may react with hydrogen ions (H⁺) being moved by passing through the electrolyte membrane to generate water (H₂O) and the generated water (H₂O) may be discharged through the water outlet at the cathode.

The anode may include a first support and a first catalyst layer positioned at one side of the first support, the first support may include carbon black, Ketjen black, acetylene black, an activated carbon powder, a carbon molecular sieve, carbon nanotubes, activated carbon having fine pores, mesoporous carbon, a conductive polymer, or a mixture thereof, and the first catalyst layer may include at least one catalyst for an OER selected from the group consisting of metals including platinum (Pt), iridium (Ir), ruthenium (Ru), nickel (Ni), manganese (Mn), cobalt (Co), iron (Fe), titanium (Ti), rhenium (Re), niobium (Nb), vanadium (V), sulfur (S), and molybdenum (Mo) and the metals combined with an oxide, a nitride, a carbide, a phosphide, and a sulfide.

The cathode may include a second support and a second catalyst layer positioned at one side of the second support, the second support may include at least one material selected from the group consisting of carbon or transition metals combined with an oxide, a nitride, a carbide, a phosphide, and a sulfide, and the second catalyst layer may include at least one catalyst for an ORR selected from the group consisting of platinum (Pt), palladium (Pd), iridium (Ir), gold (Au), silver (Ag), and alloys thereof.

The cathode may include a second support and a second catalyst layer positioned at one side of the second support, the second support may include at least one material selected from the group consisting of carbon or transition metals combined with an oxide, a nitride, a carbide, a phosphide, and a sulfide, and the second catalyst layer may include an Fe-N-C catalyst.

The Fe-N-C catalyst may inhibit a hydrogen evolution reaction and promote an ORR.

### [Advantageous Effects]

In the present invention, it is possible to constitute an oxygen generator for generating oxygen (O₂) using a simple configuration including a membrane-electrode assembly, a power supply capable of applying a certain amount of power, and a water supply source capable of supplying water to an anode of the membrane-electrode assembly.

Therefore, in the present invention, an electrochemical oxygen generator can be provided such that oxygen is generated without noise and vibration using an electrochemical method and the electrochemical oxygen generator is also miniaturized due to a simple device configuration.

### [Description of Drawings]

FIG. 1 is a schematic diagram for describing a principle of an oxygen generator according to the present invention.
FIG. 2 is a schematic exploded perspective view illustrating an application example of an oxygen generator according to the present invention.
FIG. 3 is a partially assembled perspective view illustrating the application example of the oxygen generator according to the present invention.
FIG. 4 is a schematic view illustrating an assembled state of the application example of the oxygen generator according to the present invention excluding a gasket.
FIG. 5 is a graph showing a change in oxygen generation current density according to a voltage of Experimental Example 1.
FIG. 6 is a graph showing a change in oxygen generation current density according to a voltage of Experimental Example 2.
FIG. 7 is a graph showing a change in oxygen generation current density according to a voltage of Experimental Example 3.
FIG. 8 is a graph showing a change in oxygen generation current density according to a voltage of Experimental Example 4.
FIG. 9 is a graph showing a change in oxygen generation current density according to a flow rate of air of Experimental Example 5.
FIG. 10 is a graph showing a change in oxygen generation current density according to a voltage of Experimental Example 6.
FIG. 11 is a graph showing a change in oxygen generation current density according to a voltage of Experimental Example 7.
FIG. 12 is a graph showing a change in oxygen generation current density according to a voltage of Experimental Example 8.

### [Best Mode of the Invention]

Advantages and features of the present invention and methods for accomplishing the same will be more clearly understood from embodiments described in detail below with reference to the accompanying drawings. However, the present invention is not limited to the following embodiments but may be implemented in various different forms. The embodiments are provided only to complete the present invention and to fully provide a person having ordinary skill in the art to which the present invention pertains with the category of the present invention, and the present invention will be defined by the appended claims.

Hereinafter, specific contents for carrying out the present invention will be described in detail with reference to the accompanying drawings. The same reference numeral indicates the same element regardless of the drawings. With respect to the elements referred using the term of "and/or", each of the elements and all possible combinations of the elements are included in the present invention.

It should be understood that, although terms such as "first," "second," and the like may be used herein to describe various components, these components are not limited by these terms. These terms are only used to distinguish one element or component from another element or component. Therefore, a first component described below could be termed a second component without departing from the scope and spirit of the present invention.

The terms used in the present specification are for explaining the embodiments rather than limiting the present invention. As used herein, singular expressions, unless defined otherwise in contexts, include plural expressions. The meaning of "comprises" and/or "comprising" used in this specification does not exclude the existence or addition of one or more other components in addition to the mentioned components.

Unless otherwise defined, all terms (including technical and scientific terms) used in the present specification may be used as the same meaning which may be commonly understood by the person with ordinary skill in the art to which the present invention belongs. It will be further understood that terms defined in commonly used dictionaries should not be interpreted in an idealized or excessive sense unless expressly and specifically defined.

Spatially relative terms, such as "below," "beneath," "lower," "above," "upper" and the like, may be used to easily describe relationships between one component and another component as shown in the drawings. It will be understood that the spatially relative terms are intended to encompass different orientations of components in use or in operation, in addition to the orientation depicted in the drawings. For example, if a component shown in the drawing is turned over, a component described as "below," "beneath," or "under" another component would then be oriented "above" another component. Thus, the exemplary term "below" can encompass both an orientation of above and below. Since a component may be oriented in another direction, the spatially relative terms may be interpreted in accordance with the orientation of the component.

Hereinafter, exemplary embodiments of the present invention will be described in detail with reference to the accompanying drawings.

Prior to describing an electrochemical oxygen generator according to the present invention, a general water electrolysis reaction and fuel cell reaction will be described.
- Water Electrolysis Reaction

| | |
|---|---|
| Anode: 2H₂O → O₂ + 4H⁺ + 4e⁻ | (OER) |
| Cathode: 4H⁺ + 4e⁻ → 2H₂ | (HER) |

- Fuel Cell Reaction

| | |
|---|---|
| Anode: O₂ + 4H⁺ + 4e⁻ → 2H₂O | (ORR) |
| Cathode: 2H₂ → 4H⁺ + 4e⁻ | (HOR) |

That is, in the case of the general water electrolysis reaction, an oxygen evolution reaction (OER) occurs at an anode, and a hydrogen evolution reaction (HER) occurs at a cathode.

In addition, in the case of the general fuel cell reaction, an oxygen reduction reaction (ORR) occurs at an anode, and a hydrogen oxidation reaction (HOR) occurs at a cathode.

However, in the oxygen generator according to the present invention, the following reactions occur in an anode and a cathode.
- Oxygen Generator of the Present Invention

| | |
|---|---|
| Anode: 2H₂O → O₂ + 4H⁺ + 4e⁻ | (OER) |
| Cathode: O₂ + 4H⁺ + 4e⁻ → 2H₂O | (ORR) |

That is, in the present invention, oxygen (O₂) is generated at the anode using an OER that is a water electrolysis reaction, and water (H₂O) is generated at the cathode using an ORR that is a fuel cell reaction.

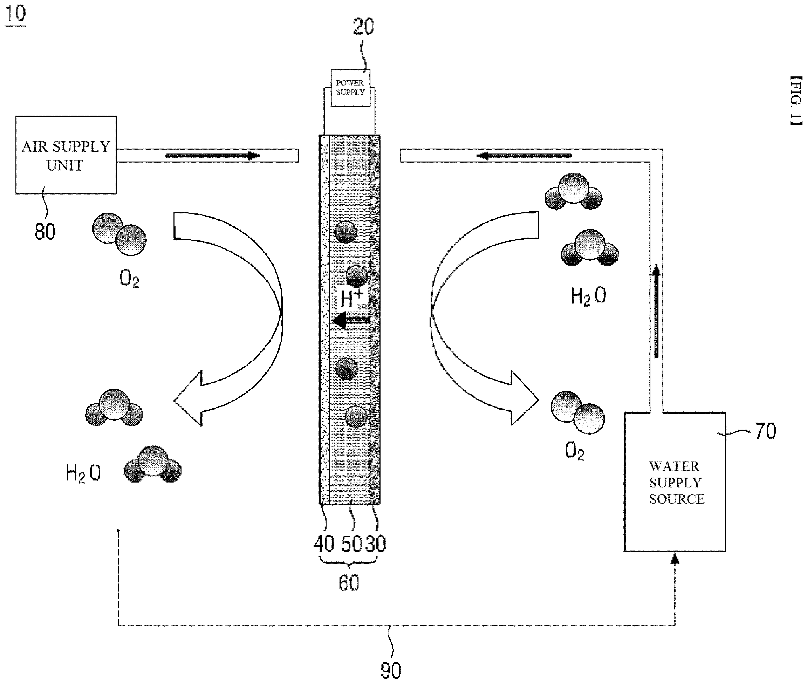

FIG. 1 is a schematic diagram for describing a principle of an oxygen generator according to the present invention.

Referring to FIG. 1, an oxygen generator 10 according to the present invention includes a membrane-electrode assembly 60 including an anode 30 connected to a first electrode of a power supply 20, a cathode 40 connected to a second electrode of the power supply, and an electrolyte membrane 50 provided between the anode and the cathode. In this case, the first electrode may be a positive electrode, and the second electrode may be a negative electrode.

In addition, the oxygen generator 10 according to the present invention includes a water supply source 70 for supplying water to the anode 30 and an air supply unit 80 for supplying oxygen to the cathode 40.

In this case, the air supply unit 80 may be for supplying oxygen to the cathode 40 and may supply general air to the cathode to supply oxygen to the cathode 40.

Meanwhile, the supply of oxygen by the air supply unit 80 may be understood to mean that air is supplied to the cathode 40. In order to supply oxygen to the cathode 40 by supplying air to the cathode 40, the air supply unit 80 may use a known fan, but a type of the air supply unit 80 is not limited thereto.

That is, air may be forcibly supplied to the cathode 40 by operating the fan, thereby supplying oxygen to the cathode 40.

In the present invention, the supply of oxygen through such a forcible method may be expressed as an air flow rate, which will be described below.

On the other hand, as described above, the following reactions occur at the anode and the cathode of the membrane-electrode assembly 60 according to the present invention.

| | |
|---|---|
| Anode: 2H₂O → O₂ + 4H⁺ + 4e⁻ | (OER) |
| Cathode: O₂ + 4H⁺ + 4e⁻ → 2H₂O | (ORR) |

That is, in the present invention, at the anode, hydrogen ions (H⁺), oxygen (O₂), and electrons are generated by electrolyzing water (H₂O) supplied from the water supply source 70.

In this case, hydrogen ions (H⁺) generated at the anode move to the cathode by passing through the electrolyte membrane 50.

At the cathode, oxygen (O₂) in air supplied from the air supply unit 80 reacts with hydrogen ions (H⁺) being moved by passing through the electrolyte membrane 50 to generate water (H₂O).

That is, in the present invention, at the anode, oxygen (O₂) is generated using an OER, and at the cathode, water (H₂O) is generated using an ORR.

Meanwhile, the oxygen generator 10 according to the present invention may further include a water collection line 90 for collecting water (H₂O) generated at the cathode 40 in the water supply source 70. On the other hand, in the drawing, water (H₂O) generated at the cathode 40 is illustrated as being collected in the water supply source 70, but water (H₂O) generated at the cathode 40 may be discharged through any discharge line.

However, in the present invention, since it is necessary to supply water (H₂O) to the anode from the water supply source 70, that is, the water supply source 70 corresponds to an essential component, water (H₂O) generated at the cathode 40 may be collected in the water supply source 70.

In the present invention, through the reactions at the anode and the cathode as described above, it is possible to constitute the oxygen generator for generating oxygen (O₂) at the anode.

That is, oxygen (O₂) generated at the anode may be applied to various fields such as in portable, domestic, medical, vehicular, or industrial oxygen generating devices, oxygen pumps, oxygen compressors, or oxygen concentrators.

In this case, as can be seen in the above-described oxygen generator according to the present invention, it is possible to constitute the oxygen generator for generating oxygen using a simple configuration including the membrane-electrode assembly 60 including the anode 30, the cathode 40, and the electrolyte membrane 50 provided between the anode and the cathode, the power supply 20 capable of applying a certain amount of power to the anode and the cathode, the water supply source 70 capable of supplying water to the anode, and the air supply unit 80 for supplying oxygen to the cathode 40.

As described above, among oxygen generating technologies for implementing the conventional oxygen generators, a pressure swing adsorption (PSA) method, a membrane separation method, or the like is highly expensive due to a large size of a system due to a complicated oxygen generating process and use of a large amount of an adsorbent or the like. In addition, in the case of these methods, since a compressor should be used, noise and vibration inevitably occur.

In addition, an oxygen generator using an oxygen tank has a problem in that the oxygen tank should be periodically filled with oxygen from a specialized gas company in accordance with the use of the oxygen generator.

However, in the present invention, it is possible to constitute the oxygen generator for generating oxygen (O₂) using a simple configuration including the membrane-electrode assembly 60, the power supply 20 capable of applying a certain amount of power, the water supply source 70 capable of supplying water to the anode of the membrane-electrode assembly, and the air supply unit 80 for supplying oxygen to the cathode of the membrane-electrode assembly.

Therefore, in the present invention, an electrochemical oxygen generator can be provided such that oxygen is generated without noise and vibration using an electrochemical method and the electrochemical oxygen generator is also miniaturized due to a simple device configuration.

Hereinafter, an application example of the oxygen generator according to the present invention will be described.

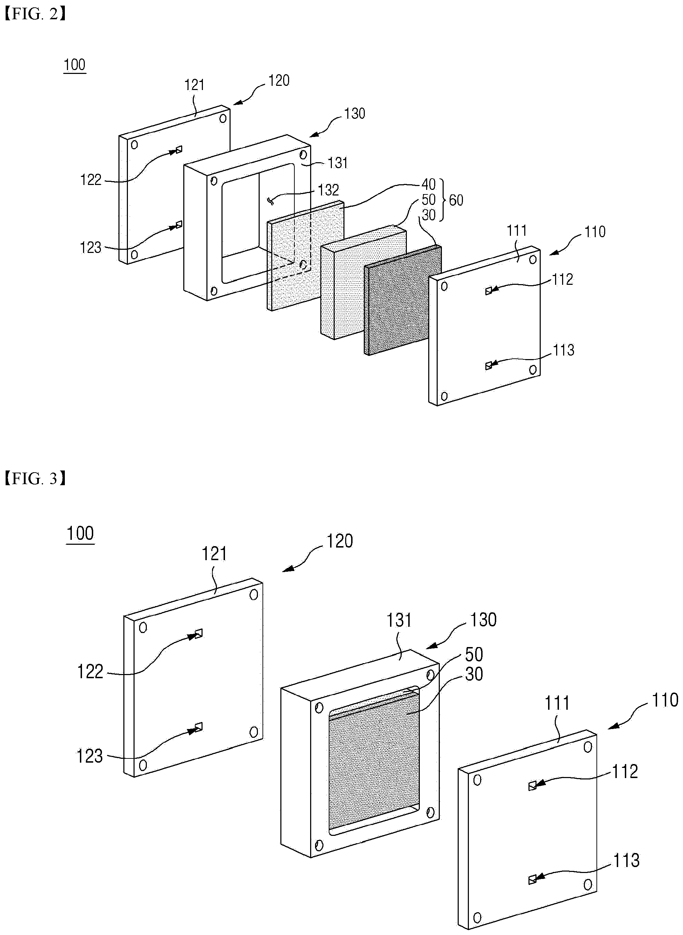

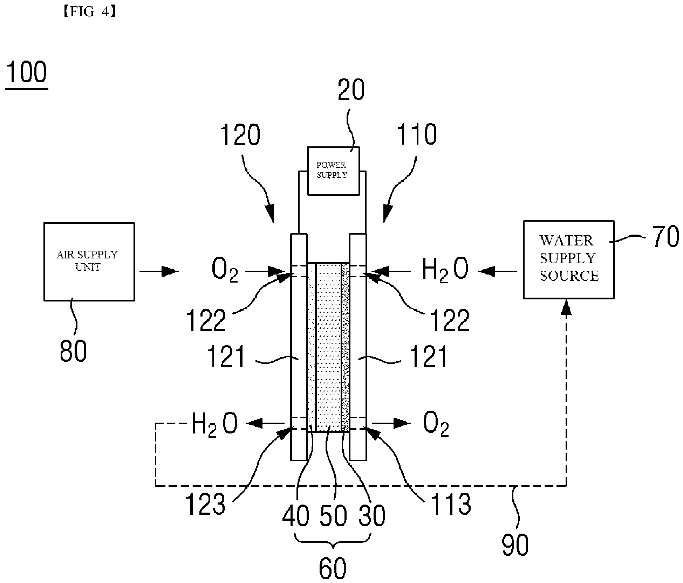

FIG. 2 is a schematic exploded perspective view illustrating an application example of an oxygen generator according to the present invention. FIG. 3 is a partially assembled perspective view illustrating the application example of the oxygen generator according to the present invention. FIG. 4 is a schematic view illustrating an assembled state of the application example of the oxygen generator according to the present invention except for a gasket.

However, the application example of the oxygen generator according to the present invention that will be described below is merely illustrated as an example to which the above-described principle of the oxygen generator according to the present invention of FIG. 1 is applied, and thus, the scope of the present invention is not limited to the application example of the oxygen generator of FIGS. 2 and 3.

In addition, in the application example of the oxygen generator according to the present invention of FIG. 2 to 4, the same components as those described above with reference to FIG. 1 are denoted by the same reference numerals.

Referring to FIGS. 2 to 4, an application example 100 of an oxygen generator according to the present invention includes a membrane-electrode assembly 60 including an anode 30 connected to a first electrode of a power supply 20, a cathode 40 connected to a second electrode of the power supply, and an electrolyte membrane 50 provided between the anode and the cathode. In this case, the first electrode may be a positive electrode, and the second electrode may be a negative electrode.

In addition, the application example 100 of the oxygen generator according to the present invention includes a water supply source 70 for supplying water to the anode 30 and an air supply unit 70 for supplying oxygen to the cathode 40.

In this case, as described above, the air supply unit 70 may be for supplying oxygen to the cathode 40, and the air supply unit 80 may supply general air to the cathode to supply oxygen to the cathode 40.

Meanwhile, the supply of oxygen by the air supply unit 80 may be understood to mean that air is supplied to the cathode 40. In order to supply oxygen to the cathode 40 by supplying air to the cathode 40, the air supply unit 80 may use a known fan, but a type of the air supply unit 80 is not limited thereto.

That is, air may be forcibly supplied to the cathode 40 by operating the fan, thereby supplying oxygen to the cathode 40.

In the present invention, the supply of oxygen through such a forcible method may be expressed as an air flow rate, which will be described below.

In addition, the application example 100 of the oxygen generator according to the present invention may further include a water collection line 90 for collecting water (H₂O) generated at the cathode 40 in the water supply source 70.

Subsequently, referring to FIGS. 2 to 4, the application example 100 of the oxygen generator device according to the present invention includes a first outer frame portion 110 positioned outside the anode 30 and a second outer frame portion 120 positioned outside the cathode 40.

In this case, the first outer frame portion 110 includes a first outer frame 111, a water inlet 112 positioned at one side of the first outer frame 111, and an oxygen outlet 113 positioned at the other side of the first outer frame 111.

That is, water (H₂O) supplied from the water supply source 70 may be supplied to the anode 30 through the water inlet 112, hydrogen ions (H⁺), oxygen (O₂), and electrons may be generated by electrolyzing water (H₂O) at the anode, and the generated oxygen (O₂) may be discharged through the oxygen outlet 113.

In addition, the second outer frame portion 120 includes a second outer frame 121, an oxygen inlet 122 positioned at one side of the second outer frame 121, and a water outlet 123 positioned at the other side of the second outer frame 121.

That is, oxygen may be supplied to the cathode 40 through the oxygen inlet 122, oxygen (O₂) in air supplied from the air supply unit (not shown) reacts with hydrogen ions (H⁺) being moved by passing through the electrolyte membrane 50 to generate water (H₂O) at the cathode, and the generated water (H₂O) may be discharged through the water outlet 123.

In this case, as described above, water (H₂O) generated at the cathode 40 may be collected in the water supply source 70 through the water collection line 90 or may be discharged through any discharge line.

Subsequently, referring to FIGS. 2 to 4, the application example 100 of the oxygen generator according to the present invention includes a gasket 130 positioned between the first outer frame portion 110 and the second outer frame portion 120.

The gasket 130 includes a gasket frame 131 coupled to the first outer frame portion 110 and the second outer frame portion 120 and a hollow portion 132 formed inside the gasket frame 131.

The gasket frame 131 may be made of Teflon or silicon.

In this case, as shown in FIG. 3, the membrane-electrode assembly 60 including the anode 30, the cathode 40, and the electrolyte membrane 50 provided between the anode and the cathode may be positioned in the hollow portion 132.

The gasket 130 may support the membrane-electrode assembly 60 and may also prevent water supplied to the membrane-electrode assembly 60 or water generated in the membrane-electrode assembly 60 from flowing to the outside.

Hereinafter, the oxygen generator according to the present invention will be described in more detail.

First, the anode 30 may include a first support, a first catalyst layer positioned at one side of the first support, and a first gas diffusion layer positioned at the other side of the first support.

The first support may include carbon black, Ketjen black, acetylene black, an activated carbon powder, a carbon molecular sieve, carbon nanotubes, activated carbon having fine pores, mesoporous carbon, a conductive polymer, or a mixture thereof.

The first catalyst layer may include at least one catalyst for an OER selected from the group consisting of metals including platinum (Pt), iridium (Ir), ruthenium (Ru), nickel (Ni), manganese (Mn), cobalt (Co), iron (Fe), titanium (Ti), rhenium (Re), niobium (Nb), vanadium (V), sulfur (S), and molybdenum (Mo) and the metals combined with an oxide, a nitride, a carbide, a phosphide, and a sulfide. The first catalyst layer may be in a state of being supported on the first support.

Next, the cathode 40 may include a second support, a second catalyst layer positioned at one side of the second support, and a second gas diffusion layer positioned at the other side of the second support.

The second support may include at least one material selected from the group consisting of carbon or transition metals combined with an oxide, a nitride, a carbide, a phosphide, and a sulfide.

The second catalyst layer may include at least one catalyst for an ORR selected from the group consisting of Pt, palladium (Pd), Ir, gold (Au), silver (Ag), and an alloy thereof. The second catalyst layer may be in a state of being supported on the second support.

In this case, the alloy of Pt, Pd, Ir, Au, and Ag may be an alloy of a metal selected from the group consisting of Pt, Pd, Ir, Au, and Ag with a transition metal, an alkali metal, or a lanthanide group metal.

The transition metal may be at least one selected from the group consisting of scandium (Sc), Ti, V, chromium (Cr), Mn, Fe, Co, Ni, copper (Cu), zinc (Zn), zirconium (Zr), Nb, Mo, technetium (Tc), Ru, rhodium (Rh), hafnium (Hf), tantalum (Ta), tungsten (W), Re, and osmium (Os). The alkali metal may be at least one selected from the group consisting of potassium (K), rubidium (Rb), cesium (Cs), beryllium (Be), magnesium (Mg), calcium (Ca), chromium (Cr), barium (Ba), and radium (Ra). The lanthanide group metal may be at least one selected from the group consisting of lanthanum (La), yttrium (Y), cerium (Ce), praseodymium (Pr), neodymium (Nd), promethium (Pm), samarium (Sm), europium (Eu), gadolinium (Gd), terbium (Tb), dysprosium (Dy), ytterbium (Yb), and lutetium (Lu).

In addition, alternatively, the second catalyst layer may include a catalyst for an ORR having an Fe-N coordination bond, and the second catalyst layer may be in a state of being supported on the second support.

In this case, in the present invention, the second catalyst layer, which includes a catalyst for a cathode, may use an Fe-N-C catalyst, and the Fe-N-C catalyst may inhibit an HER and promote an ORR, that is, an HER may not occur. Thus, the Fe-N-C catalyst may be used throughout a wide range of potentials.

On the other hand, the first gas diffusion layer and the second gas diffusion layer function to allow a reaction gas to easily access the catalyst layer. In particular, the first gas diffusion layer of the anode should function to allow water supplied from the water supply unit to pass therethrough, and the second gas diffusion layer of the cathode should function to allow oxygen supplied from the air supply unit to pass therethrough.

As long as a gas diffusion layer may perform such a function, the gas diffusion layer is not particularly limited, and for example, the gas diffusion layer may include carbon paper, carbon cloth, or a metal sheet having in a mesh form.

The metal sheet in the mesh form may be a stainless steel-based mesh, a titanium-based mesh, or a nickel-based mesh.

However, the materials of the first gas diffusion layer and the second gas diffusion layer are not limited in the present invention.

Next, the electrolyte membrane 50 may function as a transfer passage through which hydrogen ions generated at the anode are transferred to the cathode and may be a polymer electrolyte membrane having hydrogen ion exchange characteristics or a polymer electrolyte membrane having hydroxide ion exchange characteristics.

For example, the electrolyte membrane 50 may include at least one selected from the group consisting of a perfluoro-based proton conductive polymer membrane, a sulfonated polysulfone copolymer, a sulfonated poly(ether-ketone)-based polymer, a perfluorinated sulfonic acid group-containing polymer, a sulfonated polyether ether ketone-based polymer, a polyimide-based polymer, a polystyrene-based polymer, a polysulfone-based polymer, and a clay-sulfonated polysulfone nanocomposite.

In addition, the electrolyte membrane may include an aqueous solvent, and the aqueous solvent may be at least one selected from H₂SO₄, HClO₄, K₂SO₄, Na₂SO₄, H₃PO₄, H₄P₂O₇, K₂PO₄, Na₃PO₄, K₃PO₄, HNO₃, KNO₃, and NaNO₃.

A thickness of the electrolyte membrane may be, for example, in a range of 5 µm to 300 µm, 10 µm to 200 µm, or 15 µm to 100 µm. In this case, when the thickness of the electrolyte membrane is less than 5 µm, mechanical strength may be lowered and chemical stability may be lowered, and when the thickness of the electrolyte membrane exceeds 300 µm, electrical resistance may be increased.

On the other hand, in order to constitute the membrane-electrode assembly, the bonding of the anode, the cathode, and the electrolyte membrane is required, and such bonding may be performed through a thermal pressing method or the like. For example, by using a hot press device, a thermal press bonding process may be performed at a temperature ranging from of 120 °C to 150 °C and a pressure ranging from 50 kgf/cm² to 200 kgf/cm² for 0.1 minutes to 10 minutes.

### [Modes of the Invention]

Hereinafter, Experimental Examples according to the present invention will be described, but the scope of the present invention is not limited to the following Experimental Examples.

### [Experimental Example 1]

On a nafion electrolyte membrane, Pt/C as a catalyst was applied on a cathode, and an iridium oxide catalyst having a nanoporous structure was applied on an anode using a spray method, a decal method, or the like.

Water was supplied to the anode through a water supply source, and oxygen was generated from water through an OER. In this case, generated hydrogen ions moved through the nafion electrolyte membrane, and an ORR, through which oxygen in air is reduced to generate water, occurred at the cathode.

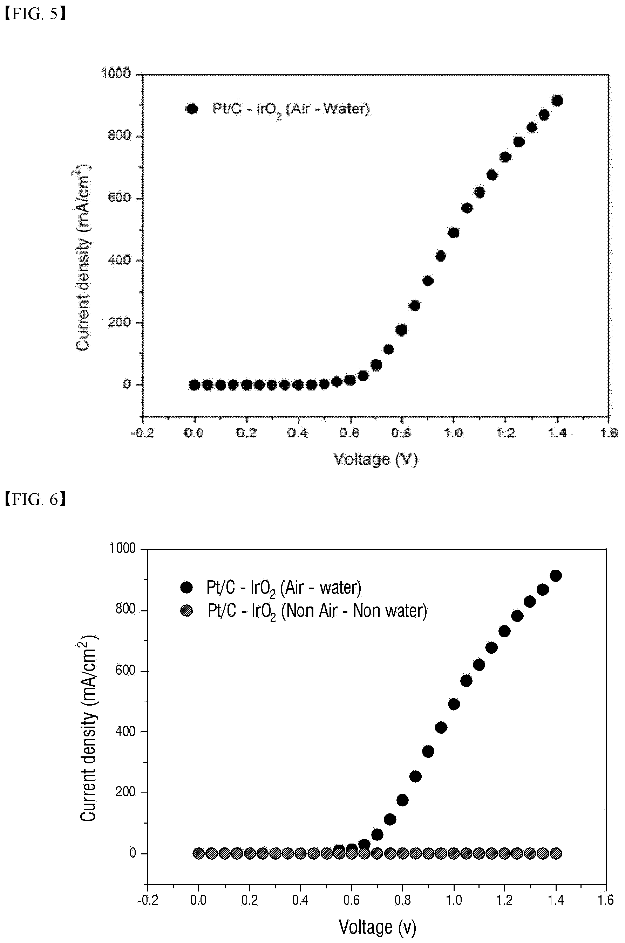

FIG. 5 is a graph showing a change in oxygen generation current density according to a voltage of Experimental Example 1.

In FIG. 5, Pt/C-IrO₂ (Air-Water) means that Pt/C was used as a cathode catalyst, IrO₂ was used as an anode catalyst, air was supplied to the cathode through a separate air supply unit, and water was supplied to the anode through a separate water supply source. Hereinafter, the expressions have the same meaning.

Referring to FIG. 5, when a voltage of 1.4 V was applied, a current density of about 1,000 mA/cm² was obtained, and in this case, it was confirmed that an amount of oxygen generated at the anode was about 350 cm³/min (STP).

### [Experimental Example 2]

On a nafion electrolyte membrane, platinum as a catalyst was applied on a cathode, and an iridium oxide catalyst having a nanoporous structure was applied on an anode using a spray method, a decal method, or the like.

In this case, unit cell evaluation was performed in the same manner as in Experiment Example 1 described above except that the supply of water to the anode through a water supply source was cut off and the supply of air to the cathode through an air supply unit was cut off.

FIG. 6 is a graph showing a change in oxygen generation current density according to a voltage of Experimental Example 2.

In FIG. 6, Pt/C-IrO₂ (Non Air-Water) means that Pt/C was used as a cathode catalyst, IrO₂ was used as an anode catalyst, the supply of water to the anode through the water supply source was cut off, and the supply of air to the cathode through the air supply unit was cut off.

Referring to FIG. 6, when a voltage of 1.4 V was applied, a current density of 0 mA/cm² was obtained, and in this case, when air was not supplied to the cathode and water was not supplied to the anode, it was confirmed that an OER, through which oxygen is generated, did not occur at the anode.

### [Experimental Example 3]

On a nafion electrolyte membrane, platinum as a catalyst was applied on a cathode, and an iridium oxide catalyst having a nanoporous structure was applied on an anode using a spray method, a decal method, or the like.

In this case, unit cell evaluation was performed in the same manner as in Experiment Example 1 described above except that the supply of air to the cathode through an air supply unit was cut off.

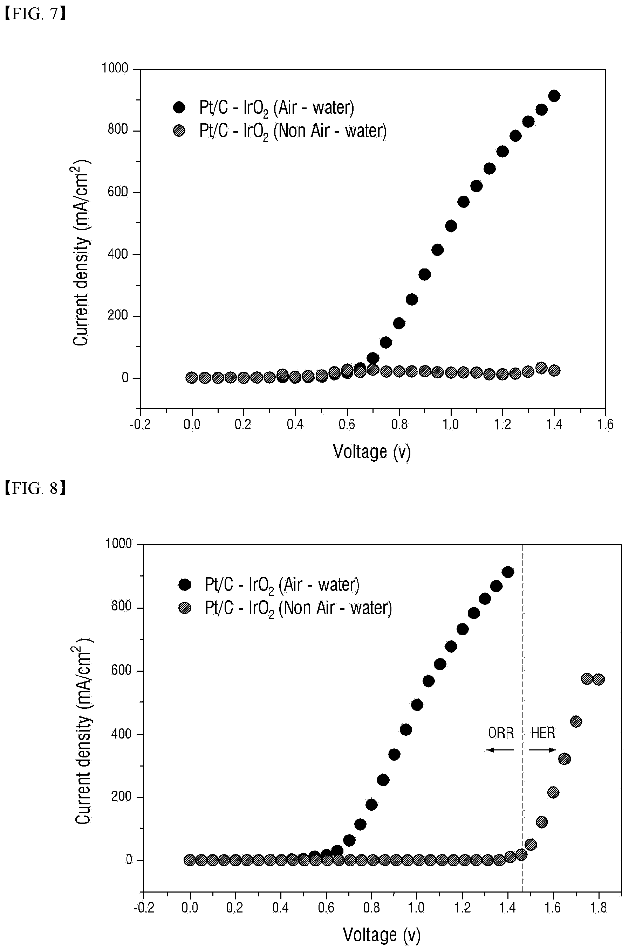

FIG. 7 is a graph showing a change in oxygen generation current density according to a voltage of Experimental Example 3.

In FIG. 7, Pt/C-IrO₂ (Non Air-Water) means that Pt/C was used as a cathode catalyst, IrO₂ was used as an anode catalyst, water was supplied to the anode through a water supply source, and the supply of air to the cathode through the air supply unit was cut off.

Referring to FIG. 7, when a voltage of 1.4 V was applied, a current density of 0 mA/cm² was obtained, and in this case, when air was not supplied to the cathode, an ORR did not occur, and thus, it was confirmed that an OER did not occur at the anode.

### [Experimental Example 4]

On a nafion electrolyte membrane, platinum as a catalyst was applied on a cathode, and an iridium oxide catalyst having a nanoporous structure was applied on an anode using a spray method, a decal method, or the like.

Water was supplied to the anode through a water supply source, but the supply of air to the cathode was cut off and a voltage was applied up to 1.8 V to perform unit cell evaluation.

FIG. 8 is a graph showing a change in oxygen generation current density according to a voltage of Experimental Example 4.

Referring to FIG. 8, when air was not supplied to the cathode, it was confirmed that constant current density was obtained only when a voltage of 1.4 V or higher was applied, but in this case, it was confirmed that an HER occurred at the cathode.

That is, Experimental Example 4 showed a contrasting result with Example 1 in that when air was supplied to the cathode through the separate air supply unit and water was supplied to the anode through the separate water supply source, current density was obtained even when a voltage of 0.6 V or more was applied. In addition, it was confirmed that an OER occurred at the anode in Experimental Example 1 and an HER occurred at the cathode in Experimental Example 4.

### [Experimental Example 5]

On a nafion electrolyte membrane, platinum as a catalyst was applied on a cathode, and an iridium oxide catalyst having a nanoporous structure was applied on an anode using a spray method, a decal method, or the like.

Water was supplied to the anode through a water supply source, air was supplied to the cathode through an air supply unit, and an air flow rate was changed from 5 ccm to 100 ccm to perform unit cell evaluation.

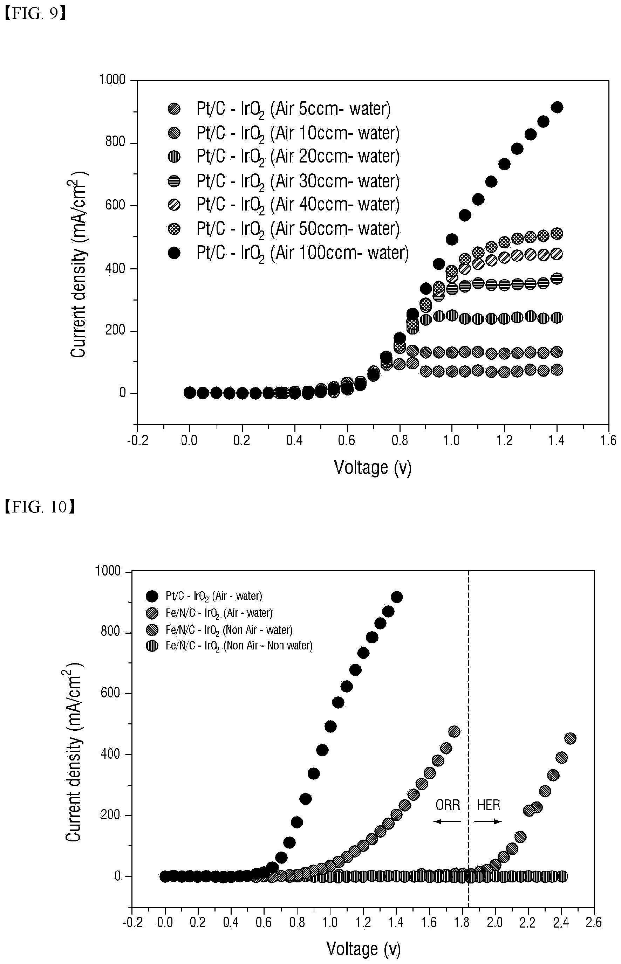

FIG. 9 is a graph showing a change in oxygen generation current density according to a flow rate of air of Experimental Example 5.

Referring to FIG. 9, it was confirmed that as the air flow rate was increased, oxygen generation current density was increased, and it was confirmed that when 100 ccm of air was supplied and a voltage of 1.4 V was applied, a current of 1,000 A/cm² was obtained.

However, when an air flow rate was 5 ccm and 10 ccm, generated current density was insufficient. Therefore, in the present invention, a supply flow rate of air through the air supply unit may be 20 ccm or more.

### [Experimental Example 6]

Unit cell evaluation was performed in the same manner as in Experimental Example 1 except that on a nafion electrolyte membrane, an iridium oxide catalyst having a nanoporous structure was used at an anode and another catalyst, i.e., a catalyst of Fe/N/C was used at a cathode instead of a catalyst of Pt/C.

Here, when Fe/N/C was used as a catalyst of the cathode, unit cell evaluation was performed by being divided into a case (1) in which water was supplied to the anode through a water supply source and air was supplied to the cathode through an air supply unit (Air-Water), a case (2) in which water was supplied to the anode through the water supply source but the air supply unit was blocked and thus air was not supplied to the cathode (Non Air-Water), and a case (3) in which the water supply source was blocked and thus water was not supplied to the anode and the air supply unit was blocked and thus air was not supplied to the cathode (Non Air-Non Water).

FIG. 10 is a graph showing a change in oxygen generation current density according to a voltage of Experimental Example 6.

Referring to FIG. 10, when a voltage of 1.4 V was applied, a current density of about 300 mA/cm² was obtained, and in this case, it was confirmed that an amount of oxygen generated at the anode was about 140 cm³/min (STP).

However, even in the case of Experimental Example 6, in the case (2) in which water was supplied to the anode through the water supply source but the air supply unit was blocked and thus air was not supplied to the cathode (Non Air-Water) and the case (3) in which the water supply source was blocked and thus water was not supplied to the anode and the air supply unit was blocked and thus air was not supplied to the cathode (Non Air-Non Water), when a voltage of 1.4 V was applied, a current density of 0 mA/cm² was obtained, and in this case, when air was not supplied to the cathode, an ORR did not occur, and thus, it was confirmed that an OER did not occur at the anode.

### [Experimental Example 7]

Unit cell evaluation was performed in the same manner as in Experimental Example 1 except that platinum as a catalyst was used at a cathode and the same platinum catalyst as the cathode was used at an anode.

Here, when PT/C was used as a catalyst of the cathode and the anode, unit cell evaluation was performed by being divided into a case (1) in which water was supplied to the anode through a water supply source and air was supplied to the cathode through an air supply unit (Air-Water) and a case (2) in which water was supplied to the anode through the water supply source but the air supply unit was blocked and thus air was not supplied to the cathode (Non Air-Water).

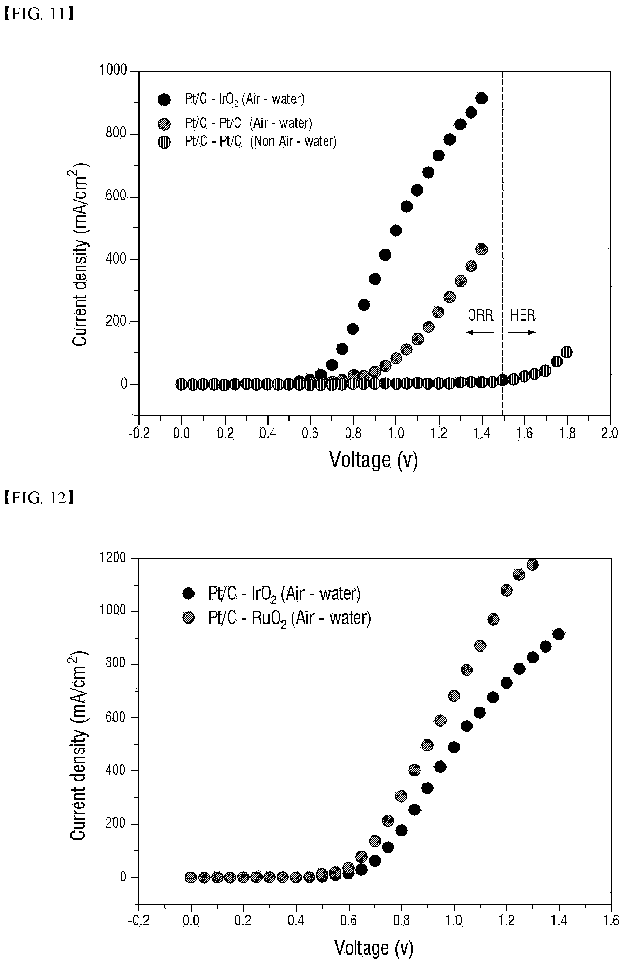

FIG. 11 is a graph showing a change in oxygen generation current density according to a voltage of Experimental Example 7.

Referring to FIG. 10, in a case in which a catalyst of Pt/C was used, when a voltage of 1.4 V was applied, a current density of about 500 mA/cm² was obtained. Thus, it was confirmed that an OER occurred even when an anode catalyst varied.

However, even in the case of Experimental Example 7, in the case (2) in which water was supplied to the anode through the water supply source but the air supply unit was blocked and thus air was not supplied to the cathode (Non Air-Water), when a voltage of 1.4 V was applied, a current density of 0 mA/cm² was obtained, and in this case, when air was not supplied to the cathode, an ORR did not occur, and thus, it was confirmed that an OER did not occur at the anode.

### [Experimental Example 8]

Unit cell evaluation was performed in the same manner as in Experimental Example 1 except that platinum as a catalyst was used at a cathode and a ruthenium oxide catalyst was used at an anode.

In this case, water was supplied to the anode through a water supply source, and air was supplied to the cathode through an air supply unit to perform unit cell evaluation.

FIG. 12 is a graph showing a change in oxygen generation current density according to a voltage of Experimental Example 8.

Referring to FIG. 12, in a case in which the ruthenium oxide catalyst was used at the anode, when a voltage of 1.4 V was applied, a current density of about 1,200 mA/cm², which was increased as compared with a case in which an iridium oxide catalyst was used at an anode, was obtained, and in this case, it was confirmed that an amount of oxygen generated at the anode was about 420 cm³/min (STP).

Therefore, it can be seen that an amount of oxygen generated at the anode may be increased by varying a catalyst of the anode.

As described above, in the present invention, it is possible to constitute an oxygen generator for generating oxygen (O₂) using a simple configuration including a membrane-electrode assembly 60, a power supply 20 capable of applying a certain amount of power, a water supply source 70 capable of supplying water to an anode of the membrane-electrode assembly, and an air supply unit 80 for supplying oxygen to a cathode of the membrane-electrode assembly.

Therefore, in the present invention, an electrochemical oxygen generator can be provided such that oxygen is generated without noise and vibration using an electrochemical method and the electrochemical oxygen generator is miniaturized due to a simple device configuration.

Although the embodiments of the present invention has been described with reference to the accompanying drawings, it should be understood that those skilled in the art can carry out other modifications without changing the technical spirit or essential features of the present invention. Therefore, it should be understood that the embodiments described herein are illustrative and not restrictive in all aspects.

## Claims

1. An oxygen generator, wherein an oxygen reduction reaction occurs at a cathode to which outside air is introduced,
an oxygen evolution reaction occurs at an anode to which water is supplied, and
an air flow rate at which the outside air flows is 20 ccm or more.

2. The oxygen generator of claim 1, wherein oxygen (O₂) is generated at the anode using the oxygen evolution reaction (OER), and water (H₂O) is generated at the cathode using the oxygen reduction reaction (ORR).

3. An oxygen generator comprising:
a membrane-electrode assembly including an anode connected to a first electrode of a power supply, a cathode connected to a second electrode of the power supply, and an electrolyte membrane provided between the anode and the cathode;
a water supply source configured to supply water to the anode; and
an air supply unit configured to supply oxygen to the cathode,
wherein oxygen (O₂) is generated at the anode using an oxygen evolution reaction (OER), and water (H₂O) is generated at the cathode using an oxygen reduction reaction (ORR).

4. The oxygen generator of claim 3, further comprising a water collection line configured to collect water (H₂O) generated at the cathode in the water supply source.

5. The oxygen generator of claim 4, further comprising a first outer frame portion positioned outside the anode and a second outer frame portion positioned outside the cathode,
wherein the first outer frame portion includes:
a first outer frame;
a water inlet positioned at one side of the first outer frame; and
an oxygen outlet positioned at the other side of the first outer frame, and
wherein the second outer frame portion includes:
a second outer frame;
an oxygen inlet positioned at one side of the second outer frame; and
a water outlet positioned at the other side of the second outer frame.

6. The oxygen generator of claim 5, wherein water (H₂O) supplied from the water supply source is supplied to the anode through the water inlet,
at the anode, hydrogen ions (H⁺), oxygen (O₂), and electrons are generated by electrolyzing water (H₂O) and the generated oxygen (O₂) is discharged through the oxygen outlet, and
at the cathode, oxygen (O₂) in air supplied from the oxygen inlet reacts with hydrogen ions (H⁺) being moved by passing through the electrolyte membrane to generate water (H₂O) and the generated water (H₂O) is discharged through the water outlet.

7. The oxygen generator of claim 3, wherein the anode includes a first support and a first catalyst layer positioned at one side of the first support,
the first support includes carbon black, Ketjen black, acetylene black, an activated carbon powder, a carbon molecular sieve, carbon nanotubes, activated carbon having fine pores, mesoporous carbon, a conductive polymer, or a mixture thereof, and
the first catalyst layer includes at least one catalyst for an OER selected from the group consisting of metals including platinum (Pt), iridium (Ir), ruthenium (Ru), nickel (Ni), manganese (Mn), cobalt (Co), iron (Fe), titanium (Ti), rhenium (Re), niobium (Nb), vanadium (V), sulfur (S), and molybdenum (Mo) and the metals combined with an oxide, a nitride, a carbide, a phosphide, and a sulfide.

8. The oxygen generator of claim 3, wherein the cathode includes a second support and a second catalyst layer positioned at one side of the second support,
the second support includes at least one material selected from the group consisting of carbon or transition metals combined with an oxide, a nitride, a carbide, a phosphide, and a sulfide, and
the second catalyst layer includes at least one catalyst for an ORR selected from the group consisting of platinum (Pt), palladium (Pd), iridium (Ir), gold (Au), silver (Ag), and alloys thereof.

9. The oxygen generator of claim 3, wherein the cathode includes a second support and a second catalyst layer positioned at one side of the second support,
the second support includes at least one material selected from the group consisting of carbon or transition metals combined with an oxide, a nitride, a carbide, a phosphide, and a sulfide, and
the second catalyst layer includes an Fe-N-C catalyst.

10. The oxygen generator of claim 9, wherein the Fe-N-C catalyst inhibits a hydrogen evolution reaction and promotes an ORR
